# EUROPEAN PATENT APPLICATION

(11) **EP 4 794 294 A1**
(43) Date of publication of application: **19.08.2026**
(21) Application number: 24884334.4
(22) Date of filing: 27.09.2024
(51) Int. Cl.: H04L 47/52, H04L 12/54

(54) **MESSAGE SCHEDULING METHOD AND FORWARDING DEVICE**

(30) Priority: 31.10.2023 CN 202311440546
(71) Applicant: ZTE CORPORATION, Shenzhen, Guangdong 518057 (CN)
(72) Inventor: ZHU, Xiangyang, Shenzhen, Guangdong 518057 (CN); YU, Jinghai, Shenzhen, Guangdong 518057 (CN)
(74) Representative: Brunazzi, Stefano
(86) International application number: PCT/CN2024/121981
(87) International publication number: WO 2025/092329

(57) **Abstract**

Embodiments of the present disclosure provide a message scheduling method and a forwarding device. The forwarding device comprises a plurality of cache queues, each cache queue is associated with one scheduling time slot, and the method comprises: scheduling messages in an associated cache queue in a time slot round robin mode; and when the messages in the currently scheduled cache queue exceed the scheduling amount of an associated time slot, pushing the messages residual in the currently scheduled cache queue when the associated time slot scheduling ends to the next time slot for scheduling, and carrying the serial number of the currently scheduled cache queue in the residual messages.

## Description

### Cross-Reference to Related Application

The present disclosure is based on and claims priority to Chinese patent application 202311440546.4 filed on October 31, 2023, the disclosure of which is incorporated herein by reference in its entirety.

### Technical Field

The present disclosure relates to the field of communications, and in particular, to a packet scheduling method and a forwarding device.

### Background

The Internet Engineering Task Force (IETF) has proposed a deterministic networking technology based on periodic scheduling. A periodic scheduling mechanism includes multiple queues, each associated with one time slot whose size is denoted as T (e.g., T=10µs). The number of the multiple queues is denoted as N. Packets in associated queues are scheduled using a time-slot round-robin mode. By leveraging this technology, end-to-end jitter of services can be confined within 2T, making this technology a popular deterministic networking technology.

In periodic scheduling technical solutions of the related art, when packets cached in a queue exceed the maximum bit resources that the time slot can carry, it is impossible to guarantee the 2T deterministic jitter; conversely, if the amount of packets cached in the queue is restricted, the bandwidth utilization will be significantly reduced.

### Summary

The embodiments of the present disclosure provide a packet scheduling method and a forwarding device, which may at least solve the problem in the related art that, when aggregated traffic exceeds the maximum bit resources that the time slot can carry, it is impossible to guarantee the 2T deterministic jitter; conversely, if aggregated traffic is reduced, the bandwidth utilization will be significantly reduced.

According to one or more embodiments of the present disclosure, provided is a packet scheduling method, applied to a forwarding device.

The forwarding device includes multiple cache queues, each of the multiple cache queues being associated with one time slot for scheduling, and the packet scheduling method includes:
scheduling packets in a cache queue associated with a time slot in a time-slot round-robin mode; and
in a case where the packets in the currently scheduled cache queue exceed a scheduled volume of the time slot associated with the currently scheduled cache queue, deferring residual packets of the currently scheduled cache queue after the scheduling of the time slot associated with the currently scheduled cache queue ends to a next time slot for scheduling, and carrying a serial number of the currently scheduled cache queue in the residual packets.

According to another embodiment of the present disclosure, provided is a forwarding device. The forwarding device includes multiple cache queues, each of the multiple cache queues being associated with one time slot for scheduling, and the forwarding device includes:
a first scheduling module, configured to schedule packets in a cache queue associated with a time slot in a time-slot round-robin mode; and
a second scheduling module, configured to, in a case where packets in a currently scheduled cache queue exceed a scheduled volume of the time slot associated with the currently scheduled cache queue, defer residual packets of the currently scheduled cache queue after the scheduling of the time slot associated with the currently scheduled cache queue ends to a next time slot for scheduling, and carry a serial number of the currently scheduled cache queue in the residual packets.

According to still another embodiment of the present disclosure, provided is a computer-readable storage medium. A computer program is stored in the computer-readable storage medium, wherein the computer program, when executed by a processor, implements operations of the packet scheduling method.

According to yet another embodiment of the present disclosure, provided is an electronic device, including a memory and a processor, wherein a computer program is stored on the memory and executable on the processor, wherein the processor is configured to execute the computer program so as to implement operations of the packet scheduling method.

### Brief Description of the Drawings

Fig. 1 is a block diagram illustrating the hardware structure of a mobile terminal for implementing a packet scheduling method according to one or more embodiments of the present disclosure;
Fig. 2 is a flow chart of a packet scheduling method according to one or more embodiments of the present disclosure;
Fig. 3 is a schematic diagram (1) of packet scheduling in a deferred time slot according to one or more embodiments of the present disclosure;
Fig. 4 is a schematic diagram of the configuration of a scheduling mode and a maximum allowed packet scheduling volume according to one or more embodiments of the present disclosure;
Fig. 5 is a schematic diagram (2) of packet scheduling in a deferred time slot according to one or more embodiments of the present disclosure;
Fig. 6 is a schematic diagram (3) of packet scheduling in a deferred time slot according to one or more embodiments of the present disclosure;
Fig. 7 is a schematic diagram of a processing flow of a forwarding device according to one or more embodiments of the present disclosure;
Fig. 8 is a schematic diagram (4) of packet scheduling in a deferred time slot according to one or more embodiments of the present disclosure;
Fig. 9 is a schematic diagram of a southbound packet format according to one or more embodiments of the present disclosure;
Fig. 10 is a schematic diagram of another southbound packet format according to one or more embodiments of the present disclosure;
Fig. 11 is a schematic diagram (5) of packet scheduling in a deferred time slot according to one or more embodiments of the present disclosure;
Fig. 12 is a schematic diagram of scheduling mode configuration parameters of a control plane according to one or more embodiments of the present disclosure; and
Fig. 13 is a structure block diagram of a forwarding device according to one or more embodiments of the present disclosure.

### Detailed Description of the Embodiments

The embodiments of the present disclosure will be described in detail below with reference to the accompanying drawings and in conjunction with the embodiments.

It should be noted that the terms "first", "second" and the like in the specification and claims of the present disclosure and the above-mentioned accompanying drawings are used to distinguish similar objects, and are not necessarily used to describe a specific order or sequence.

A periodic scheduling mechanism in deterministic networking technologies includes multiple queues, each of which may be associated with one time slot, the size of the time slot is denoted as T (e.g., T=10µs), and the number of queues is denoted as N. Packets in the associated queues are scheduled in a time-slot round-robin mode.

The number of bits that can be scheduled from a queue within each time slot T is a fixed value, i.e., T*Cap, where Cap denotes a port rate. When the packets cached in a queue exceed T*Cap, the residual packets may be discarded or cached for scheduling in a next physical cycle, resulting in packet loss or failure to guarantee the 2T jitter. Assuming that m*bits of packets can be transmitted in each T, the number of packets cached in Queue 0 is n*bits and n>m, then the packets cached in Queue 0 cannot be emptied within Time Slot 0, and in the best case, there are still (n-m)*bits of packets that cannot be transmitted. If the remaining (n-m)*bits of packets are deferred to be transmitted in Time Slot 0 of the next physical cycle, an additional N*T jitter will be introduced at the local node, thus failing to meet the determinacy of end-to-end jitter.

To improve bandwidth utilization and the number of service accesses, the industry is exploring a time slot precise orchestration technology based on a control plane. This technology performs path calculation and resource reservation based on the remaining bit amount of a time slot to prevent the accumulated packets in a queue from exceeding T*Cap. However, this technology is not yet mature at present, and faces various problems such as high algorithm complexity and end-side jitter when multiple services coexist.

Another current strategy is to reduce the dependence on control plane orchestration, keep the forwarding plane simple and efficient, and admit service packets according to their arrival time. This strategy has the advantage of being relatively simple, but is prone to cause the packets cached in queues to exceed T*Cap at convergence points. If bandwidth expansion is considered, the bandwidth utilization may be reduced, and the bearing efficiency of deterministic services cannot be improved.

To address the above problem that determinacy cannot be guaranteed when the packets cached in a queue exceed T*Cap, the embodiments of the present disclosure propose a periodic scheduling method. The technical concept of the periodic scheduling method is to schedule packets in an associated cache queue (a cache queue associated with a time slot) in a time-slot round-robin mode; and in a case where packets in the currently scheduled cache queue exceed a scheduled volume of the time slot associated with the currently scheduled cache queue, defer residual packets of the currently scheduled cache queue after the scheduling of the time slot associated with the currently scheduled cache queue ends to a next time slot for scheduling, and carry a serial number of the currently scheduled cache queue in the residual packets. Thereby, the 2T jitter is guaranteed while improving the bandwidth utilization, and there is no dependence on the precise orchestration of the control plane.

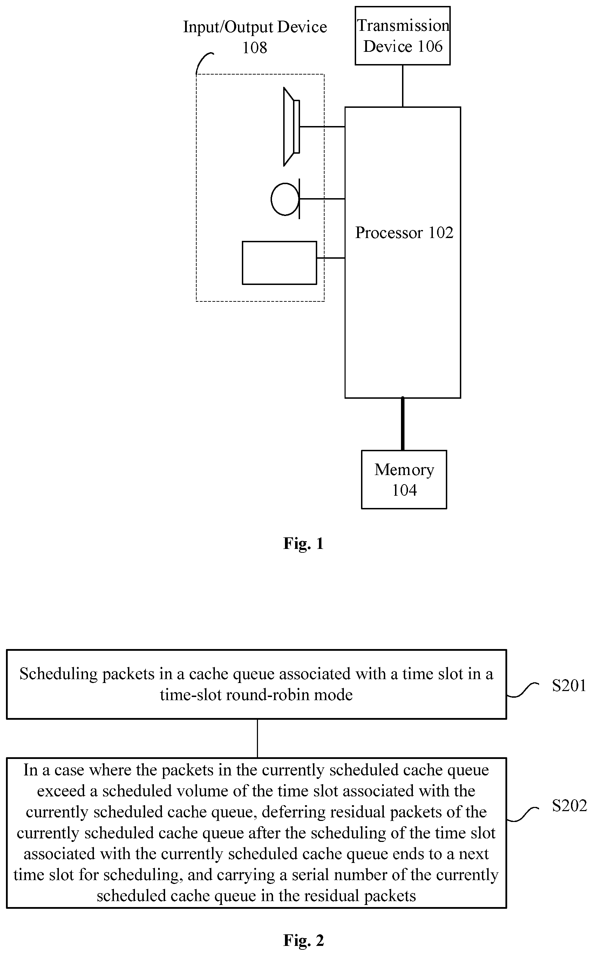

The method embodiments provided in the embodiments of the present disclosure may be executed on a mobile terminal, a computer terminal or a similar computing device. Taking the operation on a mobile terminal as an example, Fig. 1 is a block diagram illustrating the hardware structure of a mobile terminal for implementing a periodic scheduling method according to one or more embodiments of the present disclosure. As shown in Fig. 1, the mobile terminal may include one or more (only one is shown in Fig. 1) processors 102 (each of the one or more processors 102 may include, but is not limited to, a processing device such as a microprocessor (e.g., a Micro-Controller Unit (MCU)) or a programmable logic device (e.g., a Field Programmable Gate Array (FPGA))) and a memory 104 for storing data. The mobile terminal may further include a transmission device 106 for communication functions and an input/output device 108. Those having ordinary skill in the art can understand that the structure shown in Fig. 1 is merely schematic and does not limit the structure of the aforementioned mobile terminal. For example, the mobile terminal may include more or fewer components than those shown in Fig. 1, or have a different configuration from that shown in Fig. 1.

The memory 104 may be used to store computer programs, such as software programs and modules of application software, e.g., the computer program corresponding to the periodic scheduling method in the embodiments of the present disclosure. The one or more processors 102 execute various functional applications and data processing by running the computer programs stored in the memory 104, i.e., implementing the aforementioned method. The memory 104 may include a high-speed random access memory, and may also include a non-volatile memory, such as one or more magnetic storage devices, flash memories, or other non-volatile solid-state memories. In some examples, the memory 104 may further include a memory remotely disposed relative to the one or more processors 102, and such remote memories may be connected to the mobile terminal through a network. Examples of the aforementioned network include, but are not limited to, the Internet, an enterprise intranet, a local area network, a mobile communication network, and combinations thereof.

The transmission device 106 is used to receive or send data via a network. Specific examples of the aforementioned network may include a wireless network provided by a communication service provider of the mobile terminal. In an example, the transmission device 106 includes a Network Interface Controller (NIC), which can be connected to other network devices through a base station to communicate with the Internet. In one example, the transmission device 106 may be a Radio Frequency (RF) module, which is used to communicate with the Internet in a wireless manner.

In the embodiments of the present disclosure, a packet scheduling method is provided, which is applied to a forwarding device. The forwarding device includes multiple cache queues, each of the multiple cache queues being associated with one time slot for scheduling. Fig. 2 is a flow chart of a packet scheduling method according to one or more embodiments of the present disclosure. As shown in Fig. 2, the flow includes the following operations S201 and S202.

In operation S201, packets in a cache queue associated with a time slot are scheduled in a time-slot round-robin mode.

In operation S202, in a case where the packets in the currently scheduled cache queue exceed a scheduled volume of the time slot associated with the currently scheduled cache queue, residual packets of the currently scheduled cache queue after the scheduling of the time slot associated with the currently scheduled cache queue ends are deferred to a next time slot for scheduling, and a serial number of the currently scheduled cache queue is carried in the residual packets.

In the embodiments of the present disclosure, a forwarding device may include multiple cache queues, each cache queue may carry a serial number (queue serial number), each cache queue may be associated with one time slot for scheduling, and each time slot may correspond to one serial number (time slot serial number). Packets in the multiple cache queues associated with the respective time slots may be scheduled in a time-slot round-robin mode. When the packets cached in a cache queue exceed the scheduled volume of the time slot associated with the cache queue, the packets in the cache queue that exceed the scheduled volume of the time slot may be deferred to one or more subsequent time slots for scheduling.

For example, the size of a time slot is denoted as T (e.g., T=10µs), and the number of cache queues is denoted as N. The number of bits that can be scheduled from a queue within each time slot T is a fixed value, i.e., T*Cap, where Cap denotes a port rate. Assume that the number of packets cached in a cache queue is n*bits, and m*bits of packets can be transmitted in each T. If n>m, the packets cached in the cache queue cannot be emptied within the time slot associated with the cache queue, that is, when the packets cached in the cache queue exceed T*Cap, the (n-m)*bits of packets in the cache queue (i.e., the packets that exceed the preset packet threshold) may be deferred to one or more subsequent time slots for continuous transmission.

As an example, in the process of time-slot round-robin scheduling, the packets in the currently scheduled cache queue may be obtained, and a judgment may be made on whether the packets in the currently scheduled cache queue exceed the scheduled volume of the time slot associated with the currently scheduled cache queue.

As an example, in a case where the packets in the currently scheduled cache queue do not exceed the scheduled volume of the time slot associated with the currently scheduled cache queue, the packets may be directly scheduled within the current time slot associated with the currently scheduled cache queue.

As an example, in a case where the packets in the currently scheduled cache queue exceed the scheduled volume of the time slot associated with the currently scheduled cache queue, (a part of) packets in the currently scheduled cache queue that do not exceed the scheduled volume of the time slot associated with the currently scheduled cache queue may be scheduled within the time slot associated with the currently scheduled cache queue, and residual packets after the scheduling of the time slot associated with the currently scheduled cache queue ends may be deferred to a next time slot for scheduling.

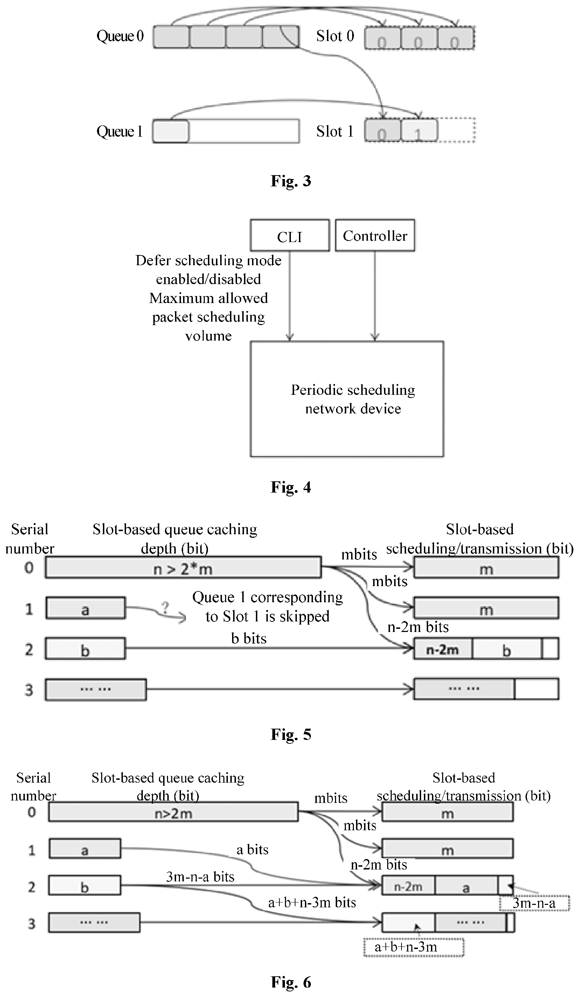

For example, Fig. 3 is a schematic diagram (1) of packet scheduling in a deferred time slot according to one or more embodiments of the present disclosure. As shown in Fig. 3, when the scheduling of Time Slot 0 ends, there is still 1 cached packet left in the currently transmitting Queue 0, and the packet is allowed to be deferred to Time Slot 1 for continuous transmission.

In the embodiments of the present disclosure, the packets may carry the serial number of the currently scheduled cache queue as a time slot scheduling serial number. For example, assume that the device where the currently scheduled cache queue is located is an upstream forwarding device. The upstream forwarding device may schedule and transmit the packets carrying the queue serial number to a downstream forwarding device. The downstream forwarding device may calculate a time slot mapping relationship based on the queue serial number carried in the packets forwarded by the upstream forwarding device and a serial number of a time slot in which the downstream forwarding device receives the packets, so as to perform deterministic scheduling on the packets and ensure end-to-end determinacy.

In the embodiments of the present disclosure, since the packets exceeding the scheduled volume of the time slot associated with the currently scheduled cache queue can be deferred to a next time slot for transmission, the packets cached in the cache queue are allowed to exceed the T*Cap limit during convergence.

In the embodiments of the present disclosure, by scheduling packets in the cache queue associated with a time slot in a time-slot round-robin mode; and in a case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to a next time slot for scheduling and carrying the serial number of the currently scheduled cache queue in the residual packets, the following problem in the related art is solved: when the packets cached in a queue exceed the maximum bearable bit resources of a time slot, the 2T deterministic jitter cannot be guaranteed, and if the number of packets cached in the queue is reduced, the bandwidth utilization will be significantly lowered. Further, the 2T jitter is guaranteed while improving the bandwidth utilization, and there is no dependence on the precise orchestration of the control plane.

In an exemplary embodiment, the operation of, in the case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to the next time slot for scheduling, and carrying the serial number of the currently scheduled cache queue in the residual packets includes:
in the case where the packets in the currently scheduled cache queue exceed the scheduled volume of the time slot associated with the currently scheduled cache queue, acquiring packet scheduling configuration information set by a control plane, wherein the packet scheduling configuration information includes a defer scheduling mode parameter; and
in a case where the defer scheduling mode parameter is enabled, deferring the residual packets of the currently scheduled cache queue after the scheduling of the time slot associated with the currently scheduled cache queue ends to the next time slot for scheduling, and carrying the serial number of the currently scheduled cache queue in the residual packets.

As an example, the control plane may configure a scheduling mode parameter of the forwarding device and set a maximum allowed packet scheduling volume.

For example, Fig. 4 is a schematic diagram of the configuration of a scheduling mode and a maximum allowed packet scheduling volume according to one or more embodiments of the present disclosure. As shown in Fig. 4, a controller may be used to configure a device through a southbound interface to enable/disable the scheduling mode, and an interface channel protocol for the southbound interface may include, but is not limited to, a Network Configuration Protocol (Netconf), a Border Gateway Protocol (BGP), and the like. A single-point configuration of the device may also be performed through a Command Line Interface (CLI) command front end.

It should be noted that the southbound interface may be an interface for managing network management systems or devices of other manufacturers, i.e., an interface provided downwards. The control of the network by the controller is mainly realized through southbound interface protocols, including link discovery, topology management, policy formulation, entry delivery, and the like. The embodiments of the present disclosure impose no limitation on the southbound interface.

In addition, whether a device enables the scheduling mode may be negotiated among forwarding devices, and the present disclosure imposes no limitation thereon.

As an example, in a case where the defer scheduling mode parameter is enabled, the residual packets of the currently scheduled cache queue after the scheduling of the time slot associated with the currently scheduled cache queue ends are deferred to the next time slot for scheduling, and the serial number of the currently scheduled cache queue is carried in the residual packets.

In an exemplary embodiment, the operation of, in the case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to the next time slot for scheduling further includes:
in the case where the packets in the currently scheduled cache queue exceed the scheduled volume of the time slot associated with the currently scheduled cache queue, and do not exceed twice the scheduled volume of the time slot associated with the currently scheduled cache queue, deferring the residual packets of the currently scheduled cache queue after the scheduling of the time slot associated with the currently scheduled cache queue ends to the next time slot for scheduling.

For example, referring to Fig. 3, assume that the number of packets cached in Queue 0 is n*bits, the scheduled volume of the time slot associated with Queue 0 is m*bits, and twice the scheduled volume of the time slot associated with Queue 0 is 2m*bits. When m<n≤2m, that is, the packets cached in Queue 0 exceed the scheduled volume of the time slot associated with Queue 0 and do not exceed twice the scheduled volume of the time slot associated with Queue 0, m*bits of packets in Queue 0 that do not exceed the preset packet threshold may be scheduled in Time Slot 0, and the remaining (n-m)*bits of packets in Queue 0 that exceed the scheduled volume of the time slot associated with Queue 0 may be deferred to the next Time Slot 1 for transmission.

In an exemplary embodiment, the packet scheduling configuration information further includes a maximum allowed packet scheduling volume, and the operation of, in the case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to the next time slot for scheduling further includes:
in a case where the packets in the currently scheduled cache queue exceed twice the scheduled volume of the time slot associated with the currently scheduled cache queue and do not exceed the maximum allowed packet scheduling volume, deferring residual packets of the currently scheduled cache queue after the scheduling of the next time slot ends to a next-next time slot for scheduling.

As an example, the packet scheduling method of the embodiments of the present disclosure does not allow unlimited defer scheduling. For example, when the packets cached in a queue exceed T*Cap*N, the scheduled time slots will certainly span two physical cycles, and additional jitter will be inevitably introduced at this time. Therefore, the queue cache volume of the packet scheduling mechanism in the embodiments of the present disclosure cannot exceed T*Cap*N (that is, the maximum allowed packet scheduling volume) at any time.

As an example, when the packets cached in a cache queue exceed 2m*bits which is twice the scheduled volume of the time slot associated with the cache queue, the packets exceeding twice the scheduled volume of the time slot associated with the cache queue may be deferred to the next time slot of the next time slot (i.e., the next-next time slot) associated with the cache queue for scheduling. For example, the number of packets cached in the current Queue 0 is n*bits, the scheduled volume of the time slot associated with Queue 0 is m*bits, and n>2m, that is, the number of packets cached in the current Queue 0 is greater than 2m*bits which is twice the scheduled volume of the time slot associated with the cache queue. m*bits of packets cached in Queue 0 may be scheduled in Time Slot 0, after the scheduling ends, residual m*bits of packets cached in Queue 0 may be deferred to Time Slot 1 for scheduling, and after the scheduling of Time Slot 1 ends, the residual (n-2m)*bits of packets cached in Queue 0 may be deferred to Time Slot 2 for scheduling.

Fig. 5 is a schematic diagram (2) of packet scheduling in a deferred time slot according to one or more embodiments of the present disclosure. As shown in Fig. 5, the number of bits that can be transmitted in each time slot is T*Cap=m*bits. When the number of packets cached in Queue 0 is n*bits and n>2*m, the first m*bits of packets in Queue 0 may be completely scheduled in Time Slot 0, the second m*bits of packets may be deferred to Time Slot 1 for complete scheduling, and the (n-2m)*bits of packets may be deferred to Time Slot 2 for complete scheduling, that is, some packets cached in Queue 0 will be deferred to Time Slot 2 for transmission. When the packets cached in Queue 0 are emptied, according to the current packet scheduling mechanism, b*bits of packets in the cache queue (i.e., Queue 2) corresponding to Time Slot 2 will continue to be scheduled in Time Slot 2. At this time, the a*bits of packets cached in Queue 1 are skipped and not provided with scheduling opportunities, resulting in the packets cached in Queue 1 being deferred to the scheduling cycle of the next physical cycle and thus introducing jitter.

To solve the above problem, the embodiments of the present disclosure modify the existing scheduling process. When a current time slot has remaining time and the previous transmitting queue is emptied, instead of scheduling the packets in the queue associated with the current time slot, the packets in the next queue of the emptied queue are scheduled.

In an exemplary embodiment, after deferring the residual packets of the currently scheduled cache queue after the scheduling of the time slot associated with the currently scheduled cache queue ends to the next time slot for scheduling, and carrying the serial number of the currently scheduled cache queue in the residual packets, the packet scheduling method may further include the following operations S1 to S3.

In operation S1, it is determined whether a difference between a serial number of a current time slot and the serial number of the currently scheduled cache queue carried in the residual packets is greater than 1.

In operation S2, in a case where the difference between the serial number of the current time slot and the serial number of the currently scheduled cache queue carried in the residual packets is not greater than 1, packets in a cache queue associated with the current time slot are scheduled.

In operation S3, in a case where the difference between the serial number of the current time slot and the serial number of the currently scheduled cache queue carried in the residual packets is greater than 1, packets in a next non-empty cache queue of the currently scheduled cache queue are scheduled.

For example, Fig. 6 is a schematic diagram (3) of packet scheduling in a deferred time slot according to one or more embodiments of the present disclosure. As shown in Fig. 6, the packets cached in Queue 0 are completely transmitted after deferred to Time Slot 2, and Time Slot 2 has remaining time, so the a*bits of packets cached in the next queue of Queue 0 (i.e., Queue 1) may be continuously scheduled. At this time, the remaining scheduled volume of Time Slot 2 is (3m-n-a)*bits, so the packets in Queue 2 may be continuously scheduled, (3m-n-a)*bits of packets in Queue 2 may be scheduled in Time Slot 2 for continuous transmission, and the residual (a+b+n-3m)*bits of packets in Queue 2 may be scheduled to the next Time Slot 3 of Time Slot 2 for continuous transmission.

In the embodiments of the present disclosure, a switch for the defer scheduling mode may be set. When the defer scheduling mode is enabled, when the packets in a cache queue are emptied, the packets in the next non-empty cache queue of the cache queue may be scheduled; when the defer scheduling mode is disabled, when the packets in a cache queue are emptied, the packets in the queue associated with the current time slot may be scheduled.

As an example, referring to Fig. 5, some packets cached in Queue 0 are deferred to Time Slot 2 for scheduling, and after the packets in Queue 0 are emptied, Time Slot 2 has remaining time. In such a case, it may be determined that the difference between the serial number of Time Slot 2 and the serial number of Queue 0 is 2, which is greater than 1, so the packets in Queue 1 which is the next queue of Queue 0 may be scheduled.

As an example, in a case where the difference between the serial number of the currently scheduled cache queue carried in the packets and the serial number of the current time slot is not greater than 1, the packets in the cache queue associated with the current time slot may be scheduled.

In an exemplary embodiment, in a case where the packets in the currently scheduled cache queue exceed the maximum allowed packet scheduling volume, packets in the currently scheduled cache queue that exceed the maximum allowed packet scheduling volume are discarded.

As an example, the maximum allowed packet scheduling volume in the packet scheduling mechanism of the forwarding device may be pre-configured through a control panel. The queue cache volume of the packet scheduling mechanism in the embodiments of the present disclosure is not allowed to exceed T*Cap*N at any time, that is, it is not allowed to exceed the maximum allowed packet scheduling volume.

As an example, when the packets in the currently scheduled cache queue exceed the maximum allowed packet scheduling volume, the packets in the currently scheduled cache queue that exceed the maximum allowed packet scheduling volume may be discarded, so as to avoid introducing additional jitter.

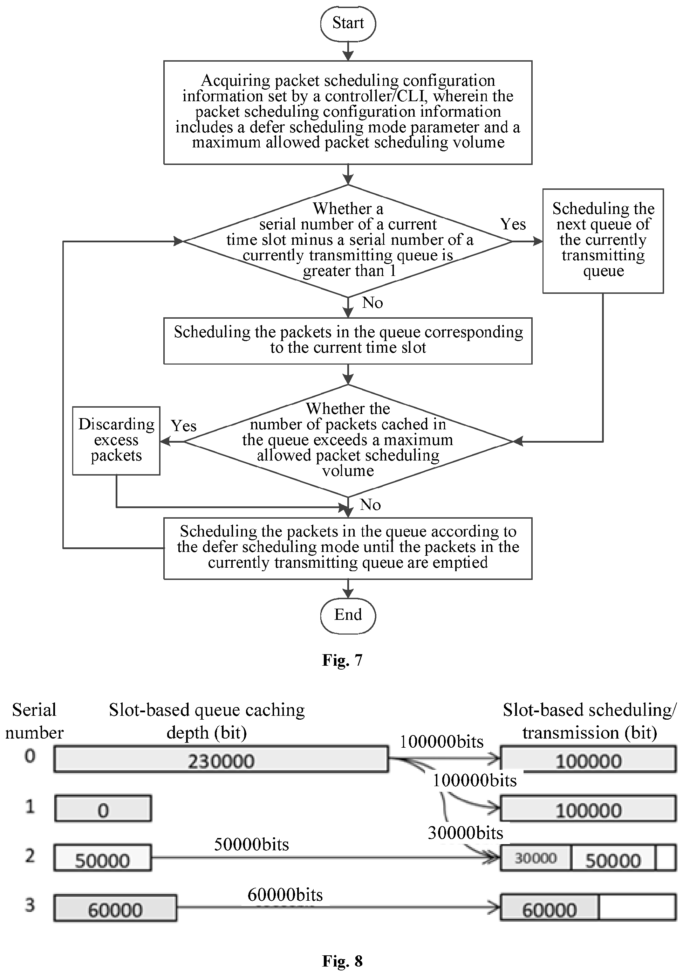

Fig. 7 is a schematic diagram of a processing flow of a forwarding device according to one or more embodiments of the present disclosure. As shown in Fig. 7, the processing flow specifically includes the following operations 1) to 7).

In operation 1), packet scheduling configuration information set by a controller/CLI is acquired, wherein the packet scheduling configuration information includes a defer scheduling mode parameter and a maximum allowed packet scheduling volume.

The forwarding device may, in a case where the defer scheduling mode in the packet defer configuration information is enabled, defer the residual packets of the currently scheduled cache queue after the scheduling of the time slot associated with the currently scheduled cache queue ends to a next time slot for scheduling.

In operation 2), in a case where the defer scheduling mode is enabled, whether the serial number of the current time slot minus the serial number of the currently transmitting queue is greater than 1 is determined; if not, the flow proceeds to operation 3); otherwise, the flow proceeds to operation 4).

In operation 3), the packets in the queue corresponding to the current time slot are scheduled, and the flow proceeds to operation 5).

In operation 4), the next queue of the currently transmitting queue is scheduled.

In operation 5), the number of packets cached in the queue corresponding to the current time slot is checked, and whether the number of packets exceeds the maximum allowed packet scheduling volume is determined; if the number of packets exceeds the maximum allowed packet scheduling volume, the flow proceeds to operation 6); otherwise, the flow proceeds to operation 7).

In operation 6), the packets in the queue that exceed the maximum allowed packet scheduling volume are discarded.

In operation 7), the packets in the queue are scheduled according to the defer scheduling mode until the packets in the currently transmitting queue are emptied, and the flow returns to operation 2).

To facilitate the understanding of the present disclosure by those having ordinary skill in the art, the present disclosure is further described below with reference to some examples.

### Example 1

Fig. 8 is a schematic diagram (4) of packet scheduling in a deferred time slot according to one or more embodiments of the present disclosure. As shown in Fig. 8, assume that the packet scheduling mechanism consists of 4 queues, the time slot length T=10µs, and the port rate is 10Gbps, so the number of bits that can be carried in each T is 100000 bits. The control plane delivers configuration information to each node of the forwarding plane, and the configuration information includes the following parameters: the defer scheduling mode is enabled, and the maximum allowed packet scheduling volume is 300000 bits.

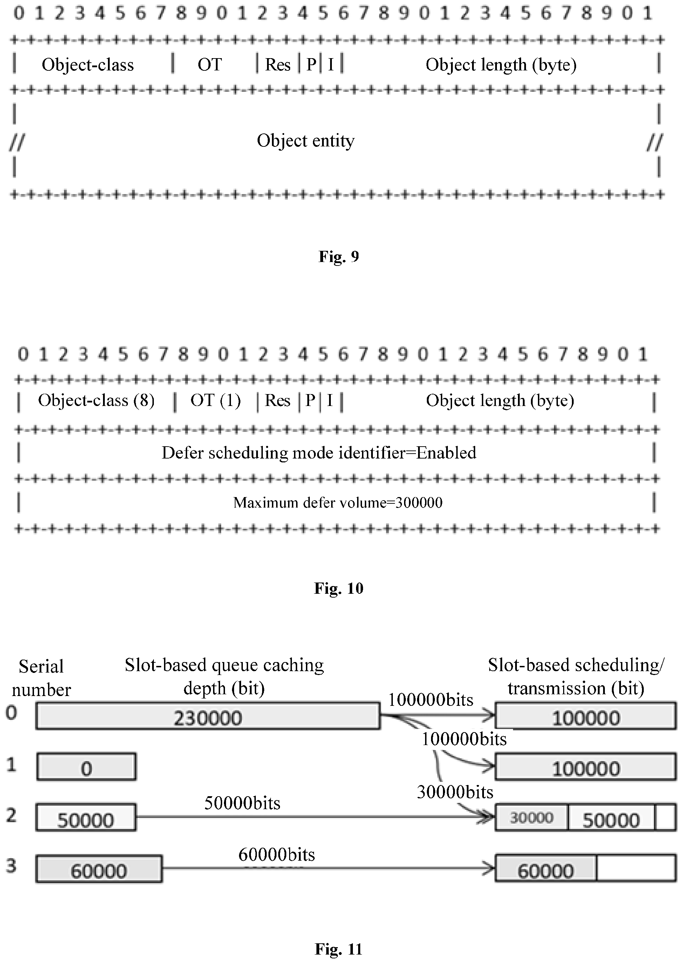

Fig. 9 is a schematic diagram of a southbound packet format according to one or more embodiments of the present disclosure, and Fig. 10 is a schematic diagram of another southbound packet format according to one or more embodiments of the present disclosure. As shown in Figs. 9 and 10, assume that the control plane extends a Path Computation Element Protocol (PCEP) through a southbound parameter delivery interface. In a PCEP protocol packet, an Object-class field and an Object Type (OT) field may be flexibly defined to specify the packet type, the value range of Object-class is 1~255, and the value range of OT is 1~15. Fig. 10 defines the values of the Object-class and OT fields of the PCEP packet.

Assume the packet caching status in the queues is as follows: Queue 0 has 230000 bits, Queue 1 has 0 bit, Queue 2 has 50000 bits, and Queue 3 has 60000 bits.

The number of packets in Queue 0 is 230000 bits<300000 bits, so Queue 0 is allowed to empty its packets. When the scheduling of the packets in Queue 0 is completed, some packets are deferred to Time Slot 2, and scheduling may continue starting from the next non-empty queue. As shown in Fig. 8, the scheduling of some of the packets in Queue 0 are deferred to be completed in Time Slot 2, and at this time, Time Slot 2 still has a resource volume of 80000 bits left. Since Queue 1 is empty, scheduling may continue from Queue 2, thereby ensuring the determinacy of packet transmission.

### Example 2

Fig. 11 is a schematic diagram (5) of packet scheduling in a deferred time slot according to one or more embodiments of the present disclosure. As shown in Fig. 11, assume that the packet scheduling mechanism consists of 4 queues, the time slot length T=10µs, and the port rate is 10Gbps, so the number of bits that can be carried in each T is 100000 bits. The control plane delivers configuration information to each node of the forwarding plane, and the configuration information includes the following parameters: the defer scheduling mode is enabled, and the maximum allowed packet scheduling volume is 300000 bits.

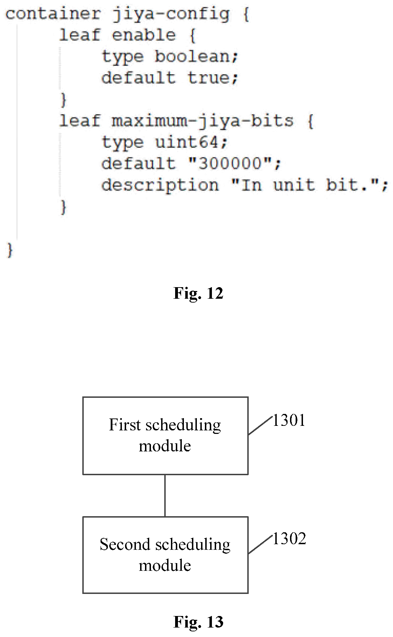

Fig. 12 is a schematic diagram of scheduling mode configuration parameters of a control plane according to one or more embodiments of the present disclosure. As shown in Fig. 12, assume that the control plane delivers the defer scheduling mode parameters through Netconf.

Assume the packet caching status in the queues is as follows: Queue 0 has 230000 bits, Queue 1 has 50000 bits, Queue 2 has 50000 bits, and Queue 3 has 60000 bits.

The number of packets in Queue 0 is 230000 bits<300000 bits, so Queue 0 is allowed to empty its packets. When the packets in Queue 0 are emptied, some packets are deferred to Time Slot 2, and according to the packet scheduling mechanism of the present disclosure, scheduling may start from Queue 1 which is the next queue of the emptied Queue 0. As shown in Fig. 11, the scheduling of some of the packets in Queue 0 are deferred to be completed in Time Slot 2, and at this time, Time Slot 2 still has a resource volume of 80000 bits left. Scheduling may start from Queue 1 and then continue to schedule the packets cached in Queue 2. Similarly, some packets in Queue 2 will be deferred to Time Slot 3 for continuous transmission, thereby ensuring the sequential transmission and determinacy of the packets.

The packet scheduling method of this example can guarantee the 2T jitter while improving the bandwidth utilization, and has no dependence on the precise orchestration of the control plane, so the packet scheduling method can be applied in products.

Through the description of the foregoing implementations, those having ordinary skill in the art can clearly understand that the packet scheduling method according to the foregoing embodiments may be implemented by means of software plus a necessary general-purpose hardware platform, and certainly may also be implemented by hardware, but the former is a better implementation manner in many cases. Based on such understanding, the technical solutions of the present disclosure essentially, or the parts contributing to the related art, may be embodied in the form of a software product. The computer software product is stored in a readable storage medium (such as ROM/RAM, magnetic disk, optical disk), and includes a number of instructions for enabling a terminal device (which may be a mobile phone, a computer, a server, a network device, or the like) to execute the packet scheduling method of the embodiments of the present disclosure.

In the embodiments of the present disclosure, a forwarding device is provided, which is configured to implement the above embodiments and exemplary implementations. Details previously described are not repeated herein. As used herein, the term "module" refers to a combination of software and/or hardware configured to perform a predetermined function. Although the device described in the following embodiments is preferably implemented in software, implementation via hardware, or a combination of hardware and software, is also possible and conceivable.

Fig. 13 is a structure block diagram of a forwarding device according to one or more embodiments of the present disclosure. As shown in Fig. 13, the forwarding device includes multiple cache queues, each of the multiple cache queues being associated with one time slot for scheduling, and the forwarding device includes:
a first scheduling module 1301, configured to schedule packets in a cache queue associated with a time slot in a time-slot round-robin mode; and
a second scheduling module 1302, configured to, in a case where packets in a currently scheduled cache queue exceed a scheduled volume of the time slot associated with the currently scheduled cache queue, defer residual packets of the currently scheduled cache queue after the scheduling of the time slot associated with the currently scheduled cache queue ends to a next time slot for scheduling, and carry a serial number of the currently scheduled cache queue in the residual packets.

In an exemplary embodiment, the forwarding device further includes:
a determination module, configured to determine whether a difference between a serial number of a current time slot and the serial number of the currently scheduled cache queue carried in the residual packets is greater than 1;
a third scheduling module, configured to, in a case where the difference between the serial number of the current time slot and the serial number of the currently scheduled cache queue carried in the residual packets is not greater than 1, schedule packets in a cache queue associated with the current time slot; and
a fourth scheduling module, configured to, in a case where the difference between the serial number of the current time slot and the serial number of the currently scheduled cache queue carried in the residual packets is greater than 1, schedule packets in a next non-empty cache queue of the currently scheduled cache queue.

In an exemplary embodiment, the second scheduling module 1302 includes:
an acquisition sub-module, configured to, in the case where the packets in the currently scheduled cache queue exceed the scheduled volume of the time slot associated with the currently scheduled cache queue, acquire packet scheduling configuration information set by a control plane, wherein the packet scheduling configuration information includes a defer scheduling mode parameter; and
a first scheduling sub-module, configured to, in a case where the defer scheduling mode parameter is enabled, defer the residual packets of the currently scheduled cache queue after the scheduling of the time slot associated with the currently scheduled cache queue ends to the next time slot for scheduling, and carry the serial number of the currently scheduled cache queue in the residual packets.

In an exemplary embodiment, the second scheduling module 1302 further includes:
a second scheduling sub-module, configured to, in the case where the packets in the currently scheduled cache queue exceed the scheduled volume of the time slot associated with the currently scheduled cache queue, and do not exceed twice the scheduled volume of the time slot associated with the currently scheduled cache queue, defer the residual packets of the currently scheduled cache queue after the scheduling of the time slot associated with the currently scheduled cache queue ends to the next time slot for scheduling.

In an exemplary embodiment, the packet scheduling configuration information further includes a maximum allowed packet scheduling volume, and the second scheduling module 1302 further includes:
a third scheduling sub-module, configured to, in a case where the packets in the currently scheduled cache queue exceed twice the scheduled volume of the time slot associated with the currently scheduled cache queue and do not exceed the maximum allowed packet scheduling volume, defer residual packets of the currently scheduled cache queue after the scheduling of the next time slot ends to a next-next time slot for scheduling.

In an exemplary embodiment, the forwarding device further includes:
a discarding module, configured to, in a case where the packets in the currently scheduled cache queue exceed the maximum allowed packet scheduling volume, discard packets in the currently scheduled cache queue that exceed the maximum allowed packet scheduling volume.

It is to be noted that each of the above modules may be implemented by software, hardware, or a combination thereof. For hardware-based implementations, the modules may be realized by, but not limited to: all modules being located on a single processor; or the modules being distributed across different processors in any combination.

The embodiments of the present disclosure further provide a computer-readable storage medium, wherein a computer program is stored in the computer-readable storage medium, and the computer program is configured to, when executed, perform the operations of any one of the above method embodiments.

In an exemplary embodiment, the computer-readable storage medium may include, but is not limited to: a Universal Serial Bus (USB) flash drive, a Read-Only Memory (ROM), a Random-Access Memory (RAM), a mobile hard disk, a magnetic disk, or an optical disc, or any other medium capable of storing computer programs.

The embodiments of the present disclosure further provide an electronic device, including a memory and a processor, wherein the memory stores a computer program, and the processor is configured to execute the computer program to perform the operations of any one of the above method embodiments.

In an exemplary embodiment, the electronic device may further include a transmission device and an input/output device, wherein the transmission device is coupled to the processor, and the input/output device is coupled to the processor.

Specific examples in the present embodiment may refer to the examples described in the above embodiments and illustrative implementations. Further details are not repeated herein.

Clearly, those having ordinary skill in the art should appreciate that each module or operation of the present disclosure may be implemented using a general-purpose computing device, either centralized on a single computing device or distributed across a network of multiple computing devices. These modules or operations may be implemented using executable program code that can be stored in a storage device and executed by a computing device. In certain cases, the operations shown or described herein may be executed in an order different from that illustrated, or may be implemented as separate integrated circuit modules, or multiple modules or operations may be integrated into a single integrated circuit module. Thus, the present disclosure is not limited to any specific hardware-software combination.

The foregoing are merely exemplary embodiments of the present disclosure and are not intended to limit the scope of the present disclosure. For those having ordinary skill in the art, various modifications, equivalents, and improvements can be made within the principles of the present disclosure. All such modifications, equivalents, and improvements shall fall within the protection scope of the present disclosure.

## Claims

1. A packet scheduling method, applied to a forwarding device, wherein the forwarding device comprises multiple cache queues, each of the multiple cache queues being associated with one time slot for scheduling, and the packet scheduling method comprises:
scheduling packets in a cache queue associated with a time slot in a time-slot round-robin mode; and
in a case where the packets in the currently scheduled cache queue exceed a scheduled volume of the time slot associated with the currently scheduled cache queue, deferring residual packets of the currently scheduled cache queue after the scheduling of the time slot associated with the currently scheduled cache queue ends to a next time slot for scheduling, and carrying a serial number of the currently scheduled cache queue in the residual packets.

2. The packet scheduling method according to claim 1, wherein after deferring the residual packets of the currently scheduled cache queue after the scheduling of the time slot associated with the currently scheduled cache queue ends to the next time slot for scheduling, and carrying the serial number of the currently scheduled cache queue in the residual packets, the packet scheduling method further comprises:
determining whether a difference between a serial number of a current time slot and the serial number of the currently scheduled cache queue carried in the residual packets is greater than 1;
in a case where the difference between the serial number of the current time slot and the serial number of the currently scheduled cache queue carried in the residual packets is not greater than 1, scheduling packets in a cache queue associated with the current time slot; and
in a case where the difference between the serial number of the current time slot and the serial number of the currently scheduled cache queue carried in the residual packets is greater than 1, scheduling packets in a next non-empty cache queue of the currently scheduled cache queue.

3. The packet scheduling method according to claim 1, wherein in the case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to the next time slot for scheduling, and carrying the serial number of the currently scheduled cache queue in the residual packets comprises:
in the case where the packets in the currently scheduled cache queue exceed the scheduled volume of the time slot associated with the currently scheduled cache queue, acquiring packet scheduling configuration information set by a control plane, wherein the packet scheduling configuration information comprises a defer scheduling mode parameter; and
in a case where the defer scheduling mode parameter is enabled, deferring the residual packets of the currently scheduled cache queue after the scheduling of the time slot associated with the currently scheduled cache queue ends to the next time slot for scheduling, and carrying the serial number of the currently scheduled cache queue in the residual packets.

4. The packet scheduling method according to claim 3, wherein in the case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to the next time slot for scheduling further comprises:
in the case where the packets in the currently scheduled cache queue exceed the scheduled volume of the time slot associated with the currently scheduled cache queue, and do not exceed twice the scheduled volume of the time slot associated with the currently scheduled cache queue, deferring the residual packets of the currently scheduled cache queue after the scheduling of the time slot associated with the currently scheduled cache queue ends to the next time slot for scheduling.

5. The packet scheduling method according to claim 4, wherein the packet scheduling configuration information further comprises a maximum allowed packet scheduling volume, and in the case where the packets in the currently scheduled cache queue exceed the scheduled volume of the time slot associated with the currently scheduled cache queue, deferring the residual packets of the currently scheduled cache queue after the scheduling of the time slot associated with the currently scheduled cache queue ends to the next time slot for scheduling further comprises:
in a case where the packets in the currently scheduled cache queue exceed twice the scheduled volume of the time slot associated with the currently scheduled cache queue and do not exceed the maximum allowed packet scheduling volume, deferring residual packets of the currently scheduled cache queue after the scheduling of the next time slot ends to a next-next time slot for scheduling.

6. The packet scheduling method according to claim 5, further comprising:
in a case where the packets in the currently scheduled cache queue exceed the maximum allowed packet scheduling volume, discarding packets in the currently scheduled cache queue that exceed the maximum allowed packet scheduling volume.

7. A forwarding device, wherein the forwarding device comprises multiple cache queues, each of the multiple cache queues being associated with one time slot for scheduling, and the forwarding device comprises:
a first scheduling module, configured to schedule packets in a cache queue associated with a time slot in a time-slot round-robin mode; and
a second scheduling module, configured to, in a case where packets in a currently scheduled cache queue exceed a scheduled volume of the time slot associated with the currently scheduled cache queue, defer residual packets of the currently scheduled cache queue after the scheduling of the time slot associated with the currently scheduled cache queue ends to a next time slot for scheduling, and carry a serial number of the currently scheduled cache queue in the residual packets.

8. The forwarding device according to claim 7, further comprising:
a determination module, configured to determine whether a difference between a serial number of a current time slot and the serial number of the currently scheduled cache queue carried in the residual packets is greater than 1;
a third scheduling module, configured to, in a case where the difference between the serial number of the current time slot and the serial number of the currently scheduled cache queue carried in the residual packets is not greater than 1, schedule packets in a cache queue associated with the current time slot; and
a fourth scheduling module, configured to, in a case where the difference between the serial number of the current time slot and the serial number of the currently scheduled cache queue carried in the residual packets is greater than 1, schedule packets in a next non-empty cache queue of the currently scheduled cache queue.

9. A computer-readable storage medium, wherein a computer program is stored in the computer-readable storage medium, wherein the computer program, when executed by a processor, implements operations of the packet scheduling method according to any one of claims 1 to 6.

10. An electronic device, comprising a memory, a processor, and a computer program stored on the memory and executable on the processor, wherein the processor implements operations of the packet scheduling method according to any one of claims 1 to 6 when executing the computer program.
